# EUROPÄISCHE PATENTSCHRIFT

(11) **EP 3 530 782 B1**
(45) Veröffentlichungstag und Bekanntmachung des Hinweises auf die Patenterteilung: **24.11.2021**
(21) Anmeldenummer: 19156049.9
(22) Anmeldetag: 07.02.2019
(51) Int. Cl.: D01H 4/10, D01H 4/12, D01H 4/24, D01H 11/00

(54) **VERFAHREN ZUM BETREIBEN EINER SPINNVORRICHTUNG EINER ROTORSPINNMASCHINE UND SPINNVORRICHTUNG EINER ROTORSPINNMASCHINE**
METHOD FOR OPERATING A SPINNING DEVICE OF A ROTOR SPINNING MACHINE AND SPINNING DEVICE OF A ROTOR SPINNING MACHINE
PROCÉDÉ DE FONCTIONNEMENT D'UN DISPOSITIF DE FILAGE D'UN MÉTIER À FILER À ROTOR ET DISPOSITIF DE FILAGE D'UN MÉTIER À FILER À ROTOR

(30) Priorität: 21.02.2018 DE 102018103876
(43) Veröffentlichungstag der Anmeldung: 28.08.2019
(73) Patentinhaber: Maschinenfabrik Rieter AG, 8406 Winterthur (CH)
(72) Erfinder: Kuebler, Markus, 73312 Geislingen (DE); Rieger, Constantin, 73072 Donzdorf (DE)
(74) Vertreter: Canzler & Bergmeier Patentanwälte Partnerschaft mbB

(56) Entgegenhaltungen:
- EP-A1- 3 184 678
- EP-A2- 0 071 893
- DE-A1- 19 718 768
- DE-A1-102012 005 390

## Beschreibung

Die vorliegende Erfindung betrifft ein Verfahren zum Betreiben einer Spinnvorrichtung einer Rotorspinnmaschine, bei dem ein Spinnrotor mit einer Rotortasse und einem Rotorschaft mittels einem in einem Antriebsgehäuse angeordneten Antrieb in Rotation versetzt wird, wobei der Antrieb dazu in Wirkverbindung mit dem Rotorschaft steht und der Rotorschaft mittels einer berührungslosen Lagerung, insbesondere einer Magnetlagerung, im Antriebsgehäuse gelagert wird, wobei die Rotortasse in einem Rotorgehäuse angeordnet ist, das mit Unterdruck beaufschlagt wird. Ferner erstreckt sich der Rotorschaft durch eine Verbindungsöffnung zwischen dem Antriebsgehäuse und dem Rotorgehäuse, so dass während des Spinnvorgangs auch das Antriebsgehäuse unter Unterdruck steht. Über einen Lufteinlass wird Druckluft in das Antriebsgehäuse zugeführt. Außerdem betrifft die Erfindung eine Spinnvorrichtung einer Rotorspinnmaschine.

Bei solchen Spinnvorrichtungen ist zwischen dem Antriebsgehäuse und dem Rotorgehäuse keine vollständige Abdichtung möglich. Somit baut sich während des Spinnbetriebs auch im Antriebsgehäuse ein Unterdruck auf. Wird nun das unter Unterdruck stehende Rotorgehäuse geöffnet, so findet dort ein plötzlicher Druckausgleich statt, während im Antriebsgehäuse noch immer Unterdruck herrscht. Dies führt zu einem Einsaugen von Verunreinigungen aus dem Rotorgehäuse in das Antriebsgehäuse. Gelangen diese in den Antrieb des Spinnrotors oder in die Lagerung, so kann dies bis zu einem Versagen sowohl der Lagerung als auch des Antriebes führen.

Die EP 2 069 562 B1 schlägt daher vor, vor dem Öffnen des Rotorgehäuses einen Druckausgleich im Antriebsgehäuse durchzuführen. Hierzu wird dem Antriebsgehäuse über einen Lufteinlass jeweils vor dem Öffnen des Rotorgehäuses Druckluft zugeführt. Hierdurch kann das Einsaugen von Verunreinigungen jedoch nur beim Öffnen des Rotorgehäuses vermieden werden.

Gemäß der DE 10 2012 005 390 A1 soll ständig, also auch während des Spinnprozesses, im Antriebsgehäuse ein Druckausgleich durchgeführt werden. Hierzu wird dem Antriebsgehäuse über eine Öffnung ständig Umgebungsluft zugeführt. Die Öffnung ist mit einem Filter versehen, so dass keine Verschmutzungen mit der Umgebungsluft in das Antriebsgehäuse gelangen können und das Einsaugen von Verschmutzungen beim Öffnen des Rotorgehäuses ebenfalls vermieden wird. Ist allerdings der Filter verschmutzt, so kommt es dennoch zum Einsaugen von Verunreinigungen und der Filter muss gereinigt werden.

Aus der DE 10 2012 015 420 A1 ist ein Verfahren zum Betreiben einer Spinnvorrichtung einer Rotorspinnmaschine bekannt, bei dem dem Antriebsgehäuse ständig, also auch während des Spinnbetriebs, Druckluft zugeführt wird. Zumindest während des Spinnprozesses herrscht daher in dem Antriebsgehäuse ein statischer Überdruck gegenüber dem Umgebungsdruck. Das Einsaugen von Verunreinigungen aus dem Rotorgehäuse in das Antriebsgehäuse kann hierdurch weitgehend vermieden werden, es ist jedoch eine Labyrinthdichtung zwischen dem Antriebsgehäuse und dem Rotorgehäuse erforderlich.

Aufgabe der vorliegenden Erfindung ist es, ein Verfahren und eine Spinnvorrichtung vorzuschlagen, mit denen Beschädigungen der Lagerung und des Antriebs durch in das Antriebsgehäuse eingesaugte Verunreinigungen vermieden werden können.

Die Aufgabe wird gelöst durch ein Verfahren zum Betreiben einer Spinnvorrichtung einer Rotorspinnmaschine und eine Spinnvorrichtung einer Rotorspinnmaschine mit den Merkmalen der unabhängigen Patentansprüche. Vorgeschlagen wird ein Verfahren zum Betreiben einer Spinnvorrichtung einer Rotorspinnmaschine. Mittels der Spinnvorrichtung kann ein Garn gesponnen werden.

Bei dem Verfahren wird ein Spinnrotor der Spinnvorrichtung mit einer Rotortasse und einem Rotorschaft mittels eines in einem Antriebsgehäuse angeordneten Antriebs, insbesondere eines Einzelantriebs, in Rotation versetzt. Der Antrieb steht dabei in Wirkverbindung mit dem Rotorschaft. Die Drehbewegung des Antriebs wird somit am Rotorschaft auf den Spinnrotor übertragen. Des Weiteren wird der Rotorschaft mittels einer Lagerung im Antriebsgehäuse gelagert. Die Lagerung beinhaltet eine Radiallagerung und eine Axiallagerung. Die Lagerung kann eine Magnetlagerung sein. Mittels der Lagerung und insbesondere der Magnetlagerung kann der Rotorschaft berührungslos gelagert werden. Dies ist von Vorteil, da sich der Spinnrotor zur Herstellung des Garns mit einer Rotationsgeschwindigkeit von bis zu 150000 1/min oder mehr dreht. Bei derartig hohen Rotationsgeschwindigkeiten ist eine berührungslose Lagerung zu bevorzugen, da eine Reibung zwischen einem Kontaktlager und dem Rotorschaft die Rotationsgeschwindigkeit bremst und es zu einem Verschleiß zwischen dem Kontaktlager und dem Rotorschaft kommt. Die berührungslose Lagerung ist jedoch in besonderem Maße anfällig für Verschmutzungen.

Ferner ist die Rotortasse in einem Rotorgehäuse angeordnet, das mit Unterdruck beaufschlagt wird, wobei der Unterdruck für den Spinnprozess benötigt wird.

Des Weiteren erstreckt sich der Rotorschaft durch eine Verbindungsöffnung zwischen dem Antriebsgehäuse und dem Rotorgehäuse von dem Rotorgehäuse bis in das Antriebsgehäuse. Die Verbindungsöffnung ist dabei im Antriebsgehäuse und im Rotorgehäuse koaxial angeordnet, so dass sich der Rotorschaft vom Antriebsgehäuse in das Rotorgehäuse erstrecken kann. Dabei kann die Verbindungsöffnung einen größeren Durchmesser aufweisen als der Rotorschaft, so dass das Antriebsgehäuse und das Rotorgehäuse im Bereich der Verbindungsöffnung vom Rotorschaft beabstandet sind. Dadurch kann der Rotorschaft frei in der Verbindungsöffnung rotieren, es entsteht jedoch während des Spinnvorgangs auch im Antriebsgehäuse ein Unterdruck. Über einen Lufteinlass wird Druckluft in das Antriebsgehäuse zugeführt.

Erfindungsgemäß wird über den Lufteinlass zum Reinigen der Lagerung intervallartig, vorzugsweise in einstellbaren Zeitabständen, Druckluft in das Antriebsgehäuse zugeführt. Hierdurch können Staub- und Faserpartikel abgeblasen werden, die beim Öffnen des Rotorgehäuses in das Antriebsgehäuse eingedrungen sind und sich dort abgesetzt haben. Die Druckluft kann dazu beispielsweise immer dann zugeführt werden, wenn sich eine gewisse Menge an Staub- und Faserpartikel abgesetzt hat. Dies kann in regelmäßigen Zeitabständen, beispielsweise nach jeweils mehreren Betriebsstunden der jeweiligen Spinnvorrichtung, erfolgen. Die Druckluft kann ferner so lange in das Antriebsgehäuse zugeführt werden, bis die Staub- und Faserpartikel entfernt sind.

Der Erfindung liegt die Erkenntnis zu Grunde, dass trotz verschiedener Maßnahmen zum Druckausgleich die Verschmutzung des Antriebsgehäuses nicht vollständig verhindert werden kann. Anders als im Stand der Technik, bei dem stets versucht wurde, dem Problem dadurch zu begegnen, dass in dem Antriebsgehäuse ein Druckausgleich durchgeführt wird, wird nun jedoch kein Druckausgleich mehr durchgeführt, sondern es wird akzeptiert, dass sich Staub- und Faserpartikel zu einem gewissen Grad im Antriebsgehäuse absetzen. Mit Hilfe der zugeführten Druckluft können diese jedoch von Zeit zu Zeit abgeblasen werden, so dass es insgesamt zu keiner schädigenden Verschmutzung des Antriebsgehäuses kommt. Verschmutzungen des Antriebs und der Lagerung werden hierdurch vermindert und Beschädigungen des Antriebs und der Lagerung können hierdurch vermieden werden. Vorteilhaft dabei ist es, dass keinerlei den Spinnprozess evtl. beeinträchtigenden Luftströmungen in das Antriebsgehäuse geleitet werden und auch ein Filter und das Reinigen desselben nicht erforderlich ist.

Vorzugsweise wird dabei eine gerichtete, d.h. eine Strömungsrichtung aufweisende, Luftströmung in dem Antriebsgehäuse erzeugt. Die Luftströmung kann dabei durch eine Orientierung des Lufteinlasses gerichtet sein. Außerdem wird die Luftströmung von einer Form und/oder einer Geometrie eines Austrittsbereichs des Lufteinlasses bestimmt. Der Lufteinlass kann beispielsweise am Austrittsbereich der Druckluft eine Düse aufweisen, mittels der die Luftströmung gerichtet werden kann. Mittels einer gerichteten Luftströmung ist es dabei möglich, gezielt die Bereiche des Antriebsgehäuses zu reinigen, die in besonderem Maße einer Verschmutzung bzw. der Ansammlung von eingesaugten Fasern unterliegen. Die Luftströmung ist somit eine Reinigungsluftströmung.

Nach einer vorteilhaften Ausführung des Verfahrens wird dabei während des Zuführens der Druckluft der Druckluftstrom gepulst, d. h. in Form mehrerer kurzzeitig aufeinander folgender Druckluftstöße, zugeführt. Hierdurch können anhaftende Verunreinigungen besonders gut gelöst werden.

Gemäß der Erfindung wird die Druckluft direkt in einen Lagerspalt der Lagerung, insbesondere der Radiallagerung, zugeführt. Der Lagerspalt kann zwischen der Lagerung und dem Rotorschaft angeordnet sein. Dadurch können im Lagerspalt abgelagerte Staub- und Faserpartikel entfernt werden. Dies ist im Lagerspalt besonders wichtig, da eine dort vorhandene Verschmutzung den Spinnrotor bei seiner Rotation abbremsen kann oder ein kontrolliertes Rotieren des Spinnrotors erschwert wird. Ebenso wird die Funktion der Lagerung insbesondere im Falle einer Magnetlagerung beeinträchtigt. Dadurch wird eine Produktivität der Spinnvorrichtung beeinträchtigt.

Hierzu wird die Druckluft an einem der Rotortasse abgewandten Ende des Rotorschaftes, insbesondere im Bereich eines Axiallagers der Lagerung, dem Antriebsgehäuse, insbesondere dem Lagerspalt, zugeführt. Hierdurch kann das Antriebsgehäuse von hinten, also von dem Axiallager her, nach vorne zu dem Rotorgehäuse hin durchströmt werden. Dadurch werden die Verschmutzungen in Richtung der Rotortasse geblasen. Die Luftströmung kann dabei auch koaxial zum Rotorschaft orientiert ausgebildet werden. Vorzugsweise wird die Druckluft durch die Verbindungsöffnung aus dem Antriebsgehäuse in das Rotorgehäuse ausgeleitet. Infolgedessen werden auch die Verschmutzungen, die durch die Luftströmung mittransportiert werden, aus dem Antriebsgehäuse durch die Verbindungsöffnung ausgeleitet. Aus dem Rotorgehäuse gelangen die Verunreinigungen, sofern die Reinigung bei geschlossener Spinnvorrichtung durchgeführt wird, über einen Unterdrucckanal der Maschine bis in einen Filterkasten, von wo sie problemlos entsorgt werden können. Bei geöffneter Spinnvorrichtung werden die Verunreinigungen einfach nach vorne aus der Spinnvorrichtung herausgeblasen.

Vorteilhaft ist es, wenn die Druckluft über eine Luftleitung in das Antriebsgehäuse und direkt in den Lagerspalt zugeführt wird. Mittels einer Luftleitung kann die Druckluft gezielt bis an die Stellen des Antriebgehäuses geführt werden, die besonders der Verschmutzung unterliegen und es ist weiterhin besonders einfach möglich, den Lufteinlass mit einer Druckluftquelle zu verbinden.

Von Vorteil ist es, wenn die Druckluft während eines Spinnvorgangs der Spinnvorrichtung eingeführt wird. Dadurch kann auch während des Betriebs der Spinnvorrichtung der Schmutz entfernt werden. Dies kann in einstellbaren Zeitabständen erfolgen. Unproduktive Stillstandszeiten der Spinnvorrichtung während des Reinigens des Antriebsgehäuses können hierdurch vermieden werden.

Nach einer anderen Ausführung ist es vorteilhaft, wenn die Druckluft während einer Unterbrechung des Spinnvorgangs der Spinnvorrichtung und vorzugsweise nach einem Öffnen der Spinnvorrichtung zugeführt wird. Dies kann beispielsweise nach einem Fadenbruch, einem Spulen- oder Kannenwechsel oder in Verbindung mit sonstigen Wartungstätigkeiten erfolgen, bei denen die Spinnvorrichtung ohnehin stillgesetzt werden muss. Besonders vorteilhaft ist es, wenn die Druckluft während des Reinigens des Spinnrotors zugeführt wird, da die Spinnvorrichtung währenddessen ohnehin stillsteht und zudem eventuell ausgeblasene Verunreinigungen zugleich mit den bei der Rotorreinigung gelösten Verunreinigungen abgeführt werden können. Beeinflussungen der Magnetlagerung im laufenden Betrieb durch den Reinigungsvorgang werden hierdurch vermieden und zudem ist das Entsorgen der Verunreinigungen besonders einfach.

Besonders vorteilhaft ist es, wenn die Druckluft während des Schneidens des Garns beim Anspinnen zugeführt wird. Das Schneiden des Garns erfolgt beim Anspinnen, um ein definiert abgelängtes Garnende wieder in die Spinnvorrichtung zurückführen zu können. Bei der Spinnvorrichtung kann dadurch die Schneidvorrichtung gemeinsam mit der Druckluftzufuhr betätigt werden.

Ebenso ist es vorteilhaft, wenn die Druckluft von einer Wartungseinheit bereitgestellt wird. Dadurch können bereits an der Wartungseinheit vorhandenen Druckluftvorrichtungen zum Bereitstellen der Druckluft verwendet werden.

Um die Druckluft zu einem beliebigen Zeitpunkt in das Antriebsgehäuse zuzuführen, kann die Druckluft alternativ aber auch von einer sich über mehrere Spinnvorrichtungen der Rotorspinnmaschine erstreckenden Druckluftleitung der Rotorspinnmaschine bereitgestellt werden. Zusätzlich oder alternativ kann die Druckluft auch von einer Druckluftleitung der Spinnvorrichtung bereitgestellt werden. Die Druckluftleitung kann eine Luftleitung sein, die auch für andere Komponenten der Spinnvorrichtung und/oder der Rotorspinnmaschine Druckluft bereitstellt. Dadurch kann die Druckluft mit einem geringen Aufwand bereitgestellt werden.

Vorgeschlagen wird des Weiteren eine Spinnvorrichtung einer Rotorspinnmaschine. Die Spinnvorrichtung weist ein mit Unterdruck beaufschlagbares Rotorgehäuse auf, in welchem eine Rotortasse eines Spinnrotors anordenbar ist. Mit Hilfe der Rotortasse des Spinnrotors kann an der Spinnvorrichtung aus einzelnen Fasern ein Garn hergestellt werden. Die Spinnvorrichtung weist ein mit dem Rotorgehäuse verbundenes Antriebsgehäuse auf, in welchem eine Lagerung für einen Rotorschaft des Spinnrotors angeordnet ist. Die Lagerung ist vorzugsweis eine berührungslose Lagerung, insbesondere eine Magnetlagerung, so dass ein Verschleiß und ein Abbremsen des Rotorschafts in der Lagerung minimiert sind.

Das Rotorgehäuse und das Antriebsgehäuse sind durch eine Verbindungsöffnung für den Rotorschaft miteinander verbunden. Der Rotorschaft reicht somit durch die Verbindungsöffnung vom Antriebsgehäuse in das Rotorgehäuse. Während des Spinnvorgangs steht daher auch das Antriebsgehäuse unter Unterdruck. Außerdem weist die Spinnvorrichtung wenigstens einen Lufteinlass auf, über den Druckluft in das Antriebsgehäuse zuführbar ist. Weiterhin weist die Spinnvorrichtung eine Steuereinheit zur Steuerung der Druckluftzufuhr auf.

Erfindungsgemäß ist mittels der Steuereinheit die Druckluft intervallartig, vorzugsweise in einstellbaren Zeitabständen, in das Antriebsgehäuse zuführbar. Mit Hilfe der Druckluft können Verschmutzungen wie Staub- und Faserpartikel, die sich in dem Antriebsgehäuse abgesetzt haben, abgeblasen und dadurch entfernt werden. Dabei mündet der Lufteinlass oder das erste Ende einer mit dem Lufteinlass verbundenen Luftleitung direkt in einen Lagerspalt der Lagerung.

Die Luftströmung kann gerichtet sein, so dass diese eine Strömungsrichtung aufweist. Eine Orientierung eines Austrittsbereichs der Luftleitung kann die Strömungsrichtung der Luftströmung vorgeben. Die Luftleitung kann beispielsweise am Austrittsbereich eine Düse aufweisen, so dass die Luftströmung gerichtet werden kann.

Vorteilhafterweise kann die Spinnvorrichtung zur Durchführung eines oder mehrerer Verfahrensschritte der vorangegangenen und/oder nachfolgenden Beschreibung ausgebildet sein.

Weiterhin ist es vorteilhaft, wenn der Lufteinlass mit einem ersten Ende einer Luftleitung verbunden ist. Mittels der Luftleitung kann die Druckluft in dem Antriebsgehäuse gezielt an besonders zur Verschmutzung neigenden Stellen geführt werden.

Der Lufteinlass oder das erste Ende der Luftleitung ist im Bereich einer Rückseite der Spinnvorrichtung, also entweder an einer dem Maschineninneren zugewandten Rückseite oder an einem die Vorder- und die Rückseite verbindenden Seitenteil der Spinnvorrichtung angeordnet. Vorzugsweise ist der Lufteinlass im Bereich eines Axiallagers der Lagerung angeordnet. Hierdurch kann das Antriebsgehäuse in vorteilhafter Weise von hinten nach vorne durchströmt werden, so dass die Luftströmung vom Rotorschaft in Richtung der Rotortasse gerichtet ist. Die Druckluft kann dann durch die Verbindungsöffnung aus dem Antriebsgehäuse wieder austreten. Die Verschmutzungen können dadurch ins Rotorgehäuse gelangen und von dort durch den Spinnunterdruck abgesaugt werden oder aus dem Rotorgehäuse einfach mittels der Druckluft ausgeblasen werden. Erfindungsgemäß mündet der Lufteinlass oder das erste Ende der Luftleitung direkt in einen Lagerspalt der Lagerung, insbesondere der Radiallagerung, so dass dieser von hinten nach vorne durchblasen und von schädigenden Verunreinigungen befreit werden kann.

Von Vorteil ist es, wenn die Luftleitung zumindest mit ihrem ersten Ende bzw. ihrem Austrittsbereich koaxial zum Rotorschaft angeordnet ist. Dadurch kann die Luftströmung entlang einer Mantelfläche des Rotorschafts strömen, um die Verschmutzungen vom Rotorschaft abzublasen.

Ebenso ist es vorteilhaft, wenn die Luftleitung mit ihrem zweiten, dem Lufteinlass abgewandten Ende an einer Vorderseite der Spinnvorrichtung mündet. Die Druckluft kann dadurch sowohl von einem Bediener manuell als auch von einer Wartungseinheit aus zugeführt werden.

Vorteilhaft ist es, wenn die Luftleitung eine Ankoppelanordnung aufweist, an der eine Wartungseinheit der Rotorspinnmaschine die Luftleitung mit Druckluft beaufschlagen kann. Dadurch können die in der Wartungseinheit vorhandenen Luftdruckvorrichtungen zum Abblasen der Verschmutzungen verwendet werden. Die Ankoppelanordnung kann an einer Vorderseite der Spinnvorrichtung angeordnet sein, an der das Rotorgehäuse angeordnet ist. Dadurch kann die an der Vorderseite der Rotorspinnmaschine entlang fahrende Wartungseinheit die Luftleitung auf kürzestem Wege mit der Druckluft beaufschlagen.

Vorteilhafterweise weist die Luftleitung an ihrem zweiten, dem Lufteinlass abgewandten Ende, ein Ventil auf. Dieses kann beispielsweise als Rückschlagventil im Bereich der Ankoppelanordnung angeordnet sein. Dadurch kann die Druckluft in der Luftleitung lediglich in eine Richtung strömen. Alternativ kann das Ventil aber auch zwischen der Luftleitung und einer Druckluftleitung der Rotorspinnmaschine vorgesehen sein.

Um das Abblasen der Verschmutzungen zu jedem Zeitpunkt und unabhängig von der Wartungseinrichtung durchführen zu können, ist es entsprechend vorteilhaft, wenn die Luftleitung mit einer in der Rotorspinnmaschine angeordneten, sich über mehrere Spinnvorrichtungen erstreckenden Druckluftleitung verbunden ist. Das Ventil kann in diesem Fall von einer Steuerung der Spinnvorrichtung und/oder der Rotorspinnmaschine gesteuert werden, um beispielsweise in Zeitintervallen das Abblasen der Verschmutzungen mittels der Druckluft durchzuführen.

Ebenfalls vorteilhaft ist es, wenn die Spinnvorrichtung eine pneumatische Schneidvorrichtung für ein in der Spinnvorrichtung produziertes Garn aufweist und die Schneidvorrichtung ebenfalls an das Ventil angeschlossen ist. Die Schneidvorrichtung und die Druckluftzufuhr können hierdurch mittels eines gemeinsamen Ventils betätigt werden, wodurch der Montage- und Kostenaufwand reduziert werden. Durch eine entsprechende Ansteuerung des Ventils kann dennoch jederzeit bei Bedarf Druckluft in das Antriebsgehäuse geführt werden, auch wenn gerade kein Faden zum Schneiden vorliegt.

Weitere Vorteile der Erfindung sind in den nachfolgenden Ausführungsbeispielen beschrieben. Es zeigen:
- **Figur 1**: eine schematische Seitenansicht einer Rotorspinnmaschine mit einer Spinnvorrichtung,
- **Figur 2**: eine Schnittansicht eines Ausführungsbeispiels einer Spinnvorrichtung mit einem Lufteinlass und einer Luftleitung,
- **Figur 3**: eine Schnittansicht eines weiteren Ausführungsbeispiels einer Spinnvorrichtung mit einem Lufteinlass und einer Luftleitung, sowie
- **Figur 4**: eine Schnittansicht eines weiteren Ausführungsbeispiels einer Spinnvorrichtung mit einem Lufteinlass, einer Luftleitung und einer Schneidvorrichtung.

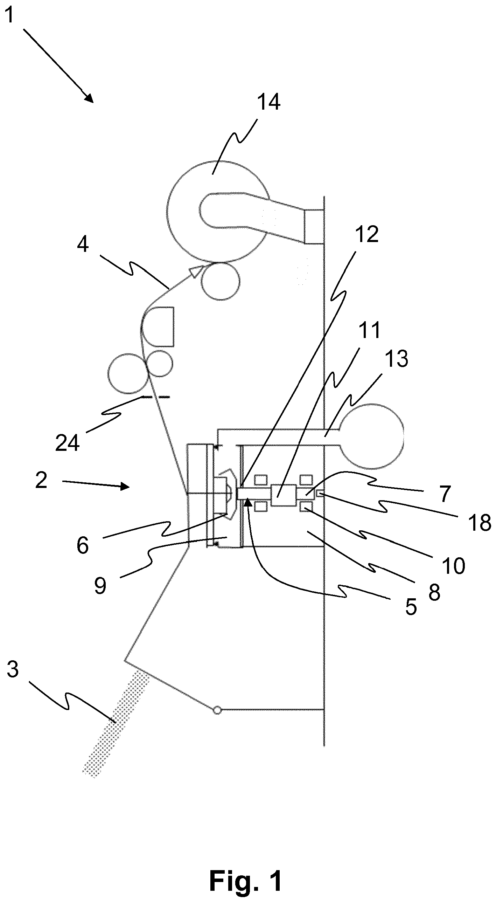

Figur 1 zeigt eine schematische Seitenansicht einer Rotorspinnmaschine 1 mit einer Spinnvorrichtung 2. Mit Hilfe der Spinnvorrichtung 2 kann aus einem Fasermaterial 3 ein Garn 4 gesponnen werden, das auf eine Spule 14 aufgewickelt werden kann. Die Spinnvorrichtung 2 weist einen Spinnrotor 5 auf, mittels dem aus dem Fasermaterial 3 das Garn 4 bei Betrieb der Rotorspinnmaschine 1 gebildet wird.

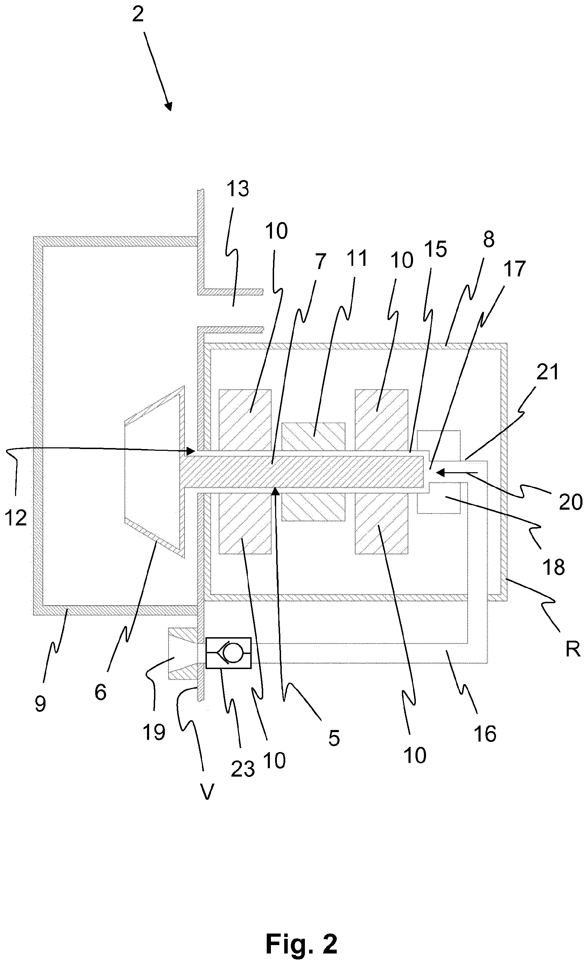

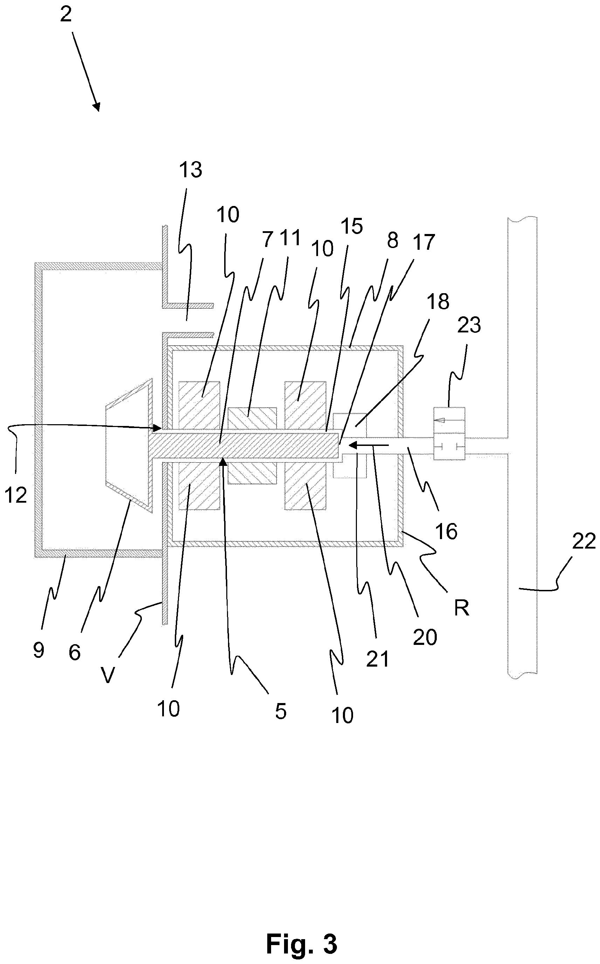

Der Spinnrotor 5 weist eine Rotortasse 6 und einen Rotorschaft 7 auf. Um aus dem Fasermaterial 3 das Garn 4 auszubilden, wird es bei einer Rotation des Spinnrotors 5 in die Rotortasse 6 geleitet. Mit Hilfe der Rotation des Spinnrotors 5 wird das Garn 4 gebildet. Der Spinnrotor 5 kann dabei von einem Antrieb 11, der insbesondere als elektromotorischer Einzelantrieb ausgebildet ist, angetrieben werden. Die Drehzahl des Spinnrotors 5 kann dabei 150000 1/min oder mehr betragen, so dass hohe Anforderungen an eine Lagerung 10 für den Spinnrotor 5 gestellt werden. Die Lagerung 10 und der Antrieb 11 sind im vorliegenden Ausführungsbeispiel in einem Antriebsgehäuse 8 angeordnet. Ferner ist im Antriebsgehäuse 8 der Rotorschaft 7 zumindest teilweise angeordnet und erstreckt sich durch eine Verbindungsöffnung 12 in ein Rotorgehäuse 9, in dem die Rotortasse 6 angeordnet ist. Durch die Anordnung der Rotortasse 6 im Rotorgehäuse 9, in die das Fasermaterial 3 eingeleitet wird, und der Lagerung 10 für den Rotorschaft 7 im Antriebsgehäuse 8, kann diese vor Faserflug im Rotorgehäuse 9 geschützt werden. Die Lagerung 10 beinhaltet eine Radiallagerung, die vorzugsweise als berührungslose Lagerung 10, insbesondere als Magnetlagerung ausgebildet ist. Zwischen der radialen Lagerung 10 und dem Rotorschaft 7 ist ein Lagerspalt 15 (siehe Figur 2 und 3) ausgebildet, der besonders empfindlich gegen das Eindringen von Verunreinigungen ist. Der Lagerspalt 15 ist ein Luftspalt. Weiterhin beinhaltet die Lagerung 10 eine Axiallagerung 18 für den Spinnrotor 5.

Die Rotorspinnmaschine 1 weist ferner einen Unterdruckkanal 13 auf, der mit dem Rotorgehäuse 9 verbunden ist, um diesen mit einem Unterdruck beaufschlagen zu können, der für den Spinnprozess erforderlich ist.

Da das Antriebsgehäuse 8 mittels der Verbindungsöffnung 12 mit dem Rotorgehäuse 9 verbunden ist, herrscht während des Betriebs der Spinnvorrichtung 2 auch in dem Antriebsgehäuse 8 ein Unterdruck. Dadurch können sowohl während des Spinnbetriebs als auch in besonderem Maße beim Öffnen der Spinnvorrichtung Faserpartikel und Staubpartikel in das Antriebsgehäuse eindringen bzw. sogar eingesaugt werden. Diese können im Laufe der Zeit nicht nur zu Beeinträchtigungen der Funktion des Antriebs und der Lagerung führen, sondern diese sogar beschädigen.

Figur 2 zeigt einen Querschnitt der Spinnvorrichtung 2. Das Antriebsgehäuse 8 weist einen Lufteinlass auf, der vorliegend mit einem ersten Ende einer Luftleitung 16 verbunden ist. Im Antriebsgehäuse 8 ist ferner ein Axiallager 18 angeordnet, um den Spinnrotor 5 in dessen Axialrichtung zu lagern. Um den Spinnrotor 5, die Lagerung 10, den Lagerspalt 15 und/oder das Axiallager 18 zu reinigen, weist die Spinnvorrichtung 2 die Luftleitung 16, über die zum Erzeugen einer Luftströmung 20 intervallartig Druckluft in das Antriebsgehäuse 8 zugeführt werden kann. Mittels der Luftströmung 20 können Verschmutzungen abgeblasen werden, die in das Antriebsgehäuse 8 eingedrungen sind.

Gemäß dem vorliegenden Ausführungsbeispiel ist zumindest ein im Bereich einer Austrittsöffnung 17 der Luftleitung 16 angeordneter Endabschnitt 21 der Luftleitung 16 bzw. ein erstes Ende der Luftleitung 16 koaxial zum Rotorschaft 7 angeordnet. Die Druckluft kann hierdurch direkt axial in den Lagerspalt 15 eingeleitet werden und umströmt hier den Rotorschaft 7 im Lagerspalt 15. Es ist aber alternativ auch denkbar, den Endabschnitt 21 beispielsweise senkrecht zu dem Rotorschaft 7 anzuordnen und somit die Druckluft dem Lagerspalt 15 von radial her zuzuführen. Ferner ist die Luftleitung 16, insbesondere mit dem Endabschnitt 21, derart angeordnet, dass die Luftströmung 20 in Richtung der Rotortasse 6 strömt. Verschmutzungen, die in der Lagerung 10, im Axiallager 18, im Lagerspalt 15 und/oder am Rotorschaft 7 angeordnet sind, können dadurch in das Rotorgehäuse 9 geblasen werden.

Um die Luftleitung 16 mit Druckluft beaufschlagen zu können, weist diese an ihrem dem Lufteinlass bzw. dem Endabschnitt 21 angewandten, zweiten Ende gemäß dem Ausführungsbeispiel der Figur 2 eine Ankoppelanordnung 19 auf. Diese ist gemäß Figur 2 an einer Vorderseite V der Spinnvorrichtung 2 angeordnet. Auf der zur Vorderseite V gegenüberliegenden Seite ist eine Rückseite R der Spinnvorrichtung 2 angeordnet. An die Ankoppelanordnung 19 kann sich eine hier nicht gezeigte Wartungseinheit für die Rotorspinnmaschine 1 ankoppeln, um die Luftleitung 16 mit Druckluft zu beaufschlagen. Dadurch kann auf eine Luftdruckvorrichtung der Wartungseinheit zurückgegriffen werden. Die Reinigung wird dabei vorzugsweise durchgeführt, wenn ohnehin eine Wartungstätigkeit an der Spinnvorrichtung durchzuführen ist und daher die Wartungseinrichtung an der Spinnvorrichtung benötigt wird. Das zweite Ende der Luftleitung 16 bzw. der Lufteinlass ist hierzu mit einem Ventil 23, hier ein Rückschlagventil, versehen.

Figur 3 zeigt ein weiteres Ausführungsbeispiel der Spinnvorrichtung 2, bei der ein Lufteinlass des Antriebsgehäuses 8 mit einem ersten Ende einer Luftleitung 16 verbunden ist. Die Luftleitung 16 ist hier an ihrem zweiten, dem Lufteinlass abgewandten Ende mit einer sich über mehrere Spinnvorrichtungen 2 erstreckenden Druckluftleitung 22 verbunden, die als Ringleitung ausgeführt ist und jeweils mit Stichleitungen mit den einzelnen Spinnvorrichtungen 2 verbunden ist. Natürlich muss die sich über mehrere Spinnvorrichtungen 2 erstreckende Druckluftleitung 22 aber nicht unbedingt als Ringleitung ausgeführt sein, ebenso könnte diese ebenfalls als Stichleitung ausgeführt sein.

In der Luftleitung 16, insbesondere an dem zweiten, dem Lufteinlass angewandten Ende der Luftleitung 16, ist gemäß dem vorliegenden Ausführungsbeispiel ein Ventil 23 angeordnet, welches beispielsweise zwei Stellungen aufweisen kann. Gemäß Figur 3 ist das Ventil 23 in einer Sperrstellung. In der anderen Stellung kann die Druckluft von der Druckluftleitung 22 zur Luftleitung 16 gelangen. Das Ventil 23 kann ferner von einer hier nicht gezeigten Steuerung der Rotorspinnmaschine 1 gesteuert werden, wenn die Luftleitung 16 zum Erzeugen der Luftströmung 20 mit Druckluft beaufschlagt werden soll. Mit Hilfe der Druckluftleitung 22 kann die Luftleitung 16 zu jedem Zeitpunkt mit der Druckluft beaufschlagt werden. Auch hier wird die Druckluft wieder direkt in den Lagerspalt 15 der Lagerung 10 eingeleitet. Vorteilhaft bei dieser Ausführung ist es, dass die Reinigung des Lagerspaltes bzw. des Antriebsgehäuses jederzeit und unabhängig von einer Wartungseinheit erfolgen kann.

In beiden Ausführungsbeispielen der Figuren 2 und 3 kann die Reinigung sowohl während des Betriebs der Spinnvorrichtung 2 als auch bei stehender Spinnvorrichtung 2 vorgenommen werden. Ebenso kann in beiden Beispielen die Reinigung bei geöffneter oder bei geschlossener Spinnvorrichtung 2 durchgeführt werden. Vorteilhaft ist es dabei in jedem Fall, dass das Abblasen des Lagerspaltes 15 von hinten nach vorne zum Rotorgehäuse 9 hin erfolgt.

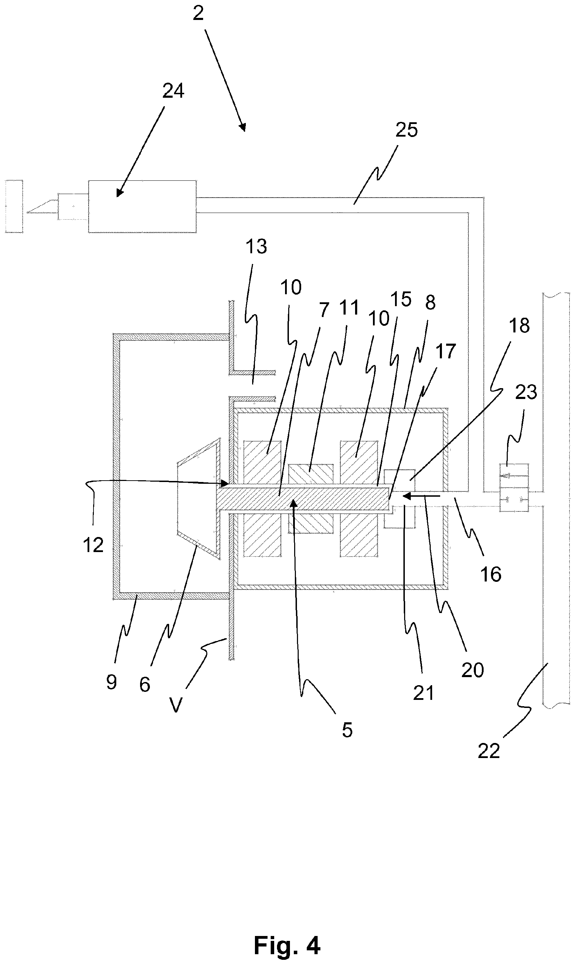

Figur 4 zeigt ein weiteres Ausführungsbeispiel der Spinnvorrichtung 2, an der zusätzlich noch eine Schneidvorrichtung 24 zum Schneiden eines anzuspinnenden Garns 4 angeordnet ist. Die Spinnvorrichtung 2 entspricht im Wesentlichen der der Figur 3, so dass im Folgenden nur noch auf die Unterschiede zur Figur 3 eingegangen wird.

Die Schneidvorrichtung 24 der vorliegenden Spinnvorrichtung 2 dient zum definierten Ablängen des Garns 4, um dieses dann, ggf. nach einer Garnendenvorbereitung, zum Anspinnen wieder in die Spinnvorrichtung 2 zurückführen zu können. Die vorliegende Schneidvorrichtung 24 ist pneumatisch betätigbar und kann daher in vorteilhafter Weise gemeinsam mit der Druckluftzufuhr in die Luftleitung 16 durch das Ventil 23 beaufschlagt werden. Die Schneidvorrichtung 24 ist hierzu mittels einer Abzweigleitung 25 mit der Luftleitung 16 verbunden. Durch die Betätigung mittels eines gemeinsamen Ventils 23 ist auch nur eine gemeinsame Ansteuerung für das Ventil 23 erforderlich, so dass die Spinnvorrichtung 2 hierdurch kostengünstig hergestellt und betrieben werden kann.

Die vorliegende Erfindung ist nicht auf die dargestellten und beschriebenen Ausführungsbeispiele beschränkt. So ist die direkte Zufuhr der Druckluft in den Lagerspalt 15 lediglich beispielhaft zu verstehen. Zusätzlich oder alternativ können auch andere Bereiche des Antriebsgehäuses auf die beschriebene Weise gereinigt werden. Im Rahmen der Patentansprüche sind weitere Abwandlungen ebenso möglich wie eine Kombination der Merkmale auch wenn diese in unterschiedlichen Ausführungsbeispielen dargestellt und beschrieben sind.

### Bezugszeichenliste

- 1: Rotorspinnmaschine
- 2: Spinnvorrichtung
- 3: Fasermaterial
- 4: Garn
- 5: Spinnrotor
- 6: Rotortasse
- 7: Rotorschaft
- 8: Antriebsgehäuse
- 9: Rotorgehäuse
- 10: Lagerung
- 11: Antrieb
- 12: Verbindungsöffnung
- 13: Unterdruckkanal
- 14: Spule
- 15: Lagerspalt
- 16: Luftleitung
- 17: Austrittsöffnung
- 18: Axiallager
- 19: Ankoppelanordnung
- 20: Luftströmung
- 21: Endabschnitt
- 22: Druckluftleitung
- 23: Ventil
- 24: Schneidvorrichtung
- 25: Abzweigleitung

- V: Vorderseite
- R: Rückseite

## Patentansprüche

1. Verfahren zum Betreiben einer Spinnvorrichtung (2) einer Rotorspinnmaschine (1), bei dem ein Spinnrotor (5) mit einer Rotortasse (6) und einem Rotorschaft (7) mittels eines in einem Antriebsgehäuse (8) angeordneten und mit dem Rotorschaft (7) in Wirkverbindung stehenden Antriebs (11), insbesondere eines Einzelantriebs, in Rotation versetzt wird und der Rotorschaft (7) mittels einer Lagerung (10, 18), insbesondere einer Magnetlagerung, im Antriebsgehäuse (8) gelagert wird, wobei die Rotortasse (6) in einem mit Unterdruck beaufschlagten Rotorgehäuse (9) angeordnet ist und sich der Rotorschaft (7) durch eine Verbindungsöffnung (12) zwischen dem Antriebsgehäuse (8) und dem Rotorgehäuse (9) erstreckt, so dass während des Spinnvorgangs auch das Antriebsgehäuse unter Unterdruck steht, und bei dem über einen Lufteinlass intervallartig Druckluft in das Antriebsgehäuse (8) zugeführt wird,
**dadurch gekennzeichnet, dass** über den Lufteinlass zum Reinigen der Lagerung (10, 18) Druckluft in das Antriebsgehäuse (8) zugeführt wird, wobei die Druckluft an einem der Rotortasse (6) abgewandten Ende des Rotorschaftes (7), insbesondere im Bereich eines Axiallagers (18) der Lagerung (10, 18), dem Antriebsgehäuse (8) zugeführt wird und wobei die Druckluft direkt in einen Lagerspalt (15) der Lagerung (10, 18) zugeführt wird.

2. Verfahren nach dem vorherigen Anspruch, **dadurch gekennzeichnet, dass** die Druckluft durch die Verbindungsöffnung (12) aus dem Antriebsgehäuse (8) in das Rotorgehäuse (9) ausgeleitet wird.

3. Verfahren nach einem oder mehreren der vorherigen Ansprüche, **dadurch gekennzeichnet, dass** die Druckluft in einstellbaren Zeitabständen in das Antriebsgehäuse (8) zugeführt wird.

4. Verfahren nach einem oder mehreren der vorherigen Ansprüche, **dadurch gekennzeichnet, dass** die Druckluft über eine Luftleitung (16) in das Antriebsgehäuse (8) zugeführt wird.

5. Verfahren nach einem oder mehreren der vorherigen Ansprüche,
**dadurch gekennzeichnet, dass** die Druckluft während einer Unterbrechung des Spinnvorgangs der Spinnvorrichtung (2), vorzugsweise nach einem Öffnen der Spinnvorrichtung (2), besonders bevorzugt während einer Rotorreinigung und/oder zugleich mit einem Schneiden des Garns (4) beim Anspinnen, zugeführt wird.

6. Verfahren nach einem oder mehreren der vorherigen Ansprüche 1 bis 4, **dadurch gekennzeichnet, dass** die Druckluft während des Spinnvorgangs der Spinnvorrichtung (2) zugeführt wird.

7. Verfahren nach einem oder mehreren der vorherigen Ansprüche,
**dadurch gekennzeichnet, dass** die Druckluft von einer Wartungseinheit bereitgestellt wird.

8. Verfahren nach einem oder mehreren der vorherigen Ansprüche 1 bis 6, **dadurch gekennzeichnet, dass** die Druckluft von einer sich über mehrere Spinnvorrichtungen (2) der Rotorspinnmaschine (1) erstreckenden Druckluftleitung (22) bereitgestellt wird.

9. Spinnvorrichtung (2) einer Rotorspinnmaschine (1), insbesondere zur Durchführung des Verfahrens gemäß einem der vorhergehenden Ansprüche, aufweisend ein mit Unterdruck beaufschlagbares Rotorgehäuse (9), in welchem eine Rotortasse (6) eines Spinnrotors (5) anordenbar ist, und ein mit dem Rotorgehäuse (9) verbundenes Antriebsgehäuse (8), in welchem eine Lagerung (10, 18), insbesondere eine Magnetlagerung, für einen Rotorschaft (7) des Spinnrotors (5) angeordnet ist, wobei das Rotorgehäuse (9) und das Antriebsgehäuse (8) durch eine Verbindungsöffnung (12) für den Rotorschaft (7) miteinander verbunden sind, so dass während des Spinnvorgangs auch das Antriebsgehäuse unter Unterdruck steht, mit wenigstens einem Lufteinlass, über den Druckluft in das Antriebsgehäuse (8) zuführbar ist, und mit einer Steuereinheit zur Steuerung der Druckluftzufuhr, wobei mittels der Steuereinheit die Druckluft über den Lufteinlass intervallartig in das Antriebsgehäuse (8) zuführbar ist, **dadurch gekennzeichnet, dass** die Druckluft vorzugsweise in einstellbaren Zeitabständen zuführbar ist und wobei der Lufteinlass oder ein erstes Ende einer mit dem Lufteinlass verbundenen Luftleitung (16) direkt in einen Lagerspalt (15) der Lagerung (10, 18) mündet, wobei der Lufteinlass oder das erste Ende der Luftleitung (16) im Bereich einer Rückseite (R) der Spinnvorrichtung (2) angeordnet ist, so dass die Druckluft an einem der Rotortasse (6) abgewandten Ende des Rotorschaftes (7) dem Antriebsgehäuse zugeführt wird.

10. Spinnvorrichtung nach dem vorangegangenen Anspruch, **dadurch gekennzeichnet, dass** der Lufteinlass oder das erste Ende der Luftleitung (16) im Bereich eines Axiallagers (18) der Lagerung (10, 18), angeordnet ist.

11. Spinnvorrichtung nach einem oder mehreren der vorangegangenen Vorrichtungsansprüche, **dadurch gekennzeichnet, dass** die Luftleitung (16) mit ihrem zweiten, dem Lufteinlass abgewandten Ende an einer Vorderseite (V) der Spinnvorrichtung (2) mündet.

12. Spinnvorrichtung nach einem oder mehreren der vorangegangenen Vorrichtungsansprüche, **dadurch gekennzeichnet, dass** die Luftleitung (16) eine Ankoppelanordnung (19) aufweist, an der eine Wartungseinheit die Luftleitung (16) mit Druckluft beaufschlagen kann.

13. Spinnvorrichtung nach einem oder mehreren der vorherigen Vorrichtungsansprüche, **dadurch gekennzeichnet, dass** die Luftleitung (16) an ihrem zweiten, dem Lufteinlass abgewandten Ende ein Ventil (23) aufweist.

14. Spinnvorrichtung nach einem oder mehreren der vorherigen Vorrichtungsansprüche 9 bis 11 oder 13, sofern nicht abhängig vom Anspruch 12, **dadurch gekennzeichnet, dass** die Luftleitung (16) mit ihrem zweiten, dem Lufteinlass abgewandten Ende mit einer sich über mehrere Spinnvorrichtungen (2) der Rotorspinnmaschine (1) erstreckenden Druckluftleitung (22) verbunden ist.

15. Spinnvorrichtung nach dem Vorrichtungsanspruch 13, vorzugsweise in Verbindung mit dem Vorrichtungsanspruch 14, **dadurch gekennzeichnet, dass** die Spinnvorrichtung (2) eine pneumatische Schneidvorrichtung (24) für ein in der Spinnvorrichtung (2) produziertes Garn (4) aufweist und dass die Schneidvorrichtung (24) ebenfalls an das Ventil (23) angeschlossen ist.

## Claims

1. A method for operating a spinning device (2) of a rotor spinning machine (1), in which a spinning rotor (5) comprising a rotor cup (6) and a rotor shaft (7) is set into rotation with the aid of a drive (11), in particular, a single drive, which is situated in a drive housing (8) and is operatively connected to the rotor shaft (7), and the rotor shaft (7) is supported in the drive housing (8) with the aid of a bearing (10, 18), in particular, a magnetic bearing, wherein the rotor cup (6) is situated in a rotor housing (9) to which vacuum is applied and the rotor shaft (7) extends between the drive housing (8) and the rotor housing (9) through a connection opening (12), and so the drive housing is also under vacuum during the spinning process, and in which compressed air is fed intermittently into the drive housing (8) via an air inlet, **characterized in that** compressed air is fed into the drive housing (8) via the air inlet in order to clean the bearing (10, 18), wherein the compressed air is fed, at an end of the rotor shaft (7) facing away from the rotor cup (6), in particular, in the area of an axial bearing (18) of the bearing (10, 18), to the drive housing (8) and wherein the compressed air is fed directly into a bearing gap (15) of the bearing (10, 18).

2. The method as claimed in the preceding claim, **characterized in that** the compressed air is directed out of the drive housing (8) into the rotor housing (9) through the connection opening (12).

3. The method as claimed in one or more of the preceding claims, **characterized in that** the compressed air is fed into the drive housing (8) at adjustable time intervals.

4. The method as claimed in one or more of the preceding claims, **characterized in that** the compressed air is fed via an air duct (16) into the drive housing (8).

5. The method as claimed in one or more of the preceding claims, **characterized in that** the compressed air is supplied during an interruption of the spinning process of the spinning device (2), preferably after the spinning device (2) has been opened, particularly preferably during a rotor cleaning and/or simultaneously with a cutting of the yarn (4) during piecing.

6. The method as claimed in one or more of the preceding claims 1 to 4, **characterized in that** the compressed air is fed to the spinning device (2) during the spinning process.

7. The method as claimed in one or more of the preceding claims, **characterized in that** the compressed air is made available by a maintenance unit.

8. The method as claimed in one or more of the preceding claims 1 to 6, **characterized in that** the compressed air is made available via a compressed air duct (22) extending across multiple spinning devices (2) of the rotor spinning machine (1).

9. A spinning device (2) of a rotor spinning machine (1), in particular, for carrying out the method as claimed in one of the preceding claims, comprising a rotor housing (9), which can be acted upon with a vacuum and in which a rotor cup (6) of a spinning rotor (5) can be situated, and a drive housing (9) connected to the rotor housing (9), in which a bearing (10, 18), in particular, a magnetic bearing, for a rotor shaft (7) of the spinning rotor (5) is situated, wherein the rotor housing (9) and the drive housing (8) are connected to each other via a connection opening (12) for the rotor shaft (7), and so the drive housing is also under vacuum during the spinning process, comprising at least one air inlet, via which compressed air can be fed into the drive housing (8), and comprising a control unit for controlling the compressed air feed,
wherein with the aid of the control unit, the compressed air can be fed into the drive housing (8) via the air inlet at intervals **characterized in that**, the compressed air can be fed preferably at adjustable time intervals and wherein the air inlet or a first end of the air duct (16) connected to the air inlet opens directly into a bearing gap (15) of the bearing (10, 18), wherein the air inlet or the first end of the air duct (16), is situated in the area of a rear side (R) of the spinning device (2), and so the compressed air is supplied to the drive housing at an end of the rotor shaft (7) facing away from the rotor cup (6).

10. The spinning device as claimed in the preceding claim, **characterized in that** the air inlet or the first end of an air duct (16) is situated in the area of an axial bearing (18) of the bearing (10, 18).

11. The spinning device as claimed in one or more of the preceding device claims, **characterized in that** the air duct (16) opens into a front side (V) of the spinning device (2) via its second end, which faces away from the air inlet.

12. The spinning device as claimed in one or more of the preceding device claims, **characterized in that** the air duct (16) comprises a coupling system (19), at which a maintenance unit can apply compressed air to the air duct (16).

13. The spinning device as claimed in one or more of the preceding device claims, **characterized in that** the air duct (16) comprises a valve (23) at its second end, which faces away from the air inlet.

14. The spinning device as claimed in one or more of the preceding device claims 9 to 11 or 13, where not dependent on claim 12, **characterized in that** the air duct (16) is connected via its second end, which faces away from the air inlet, to a compressed air duct (22) extending across multiple spinning devices (2) of the rotor spinning machine (1).

15. The spinning device as claimed in device claim 13, preferably in connection with device claim 14, **characterized in that** the spinning device (2) comprises a pneumatic cutting device (24) for a yarn (4) produced in the spinning device (2), and the cutting device (24) is likewise connected to the valve (23).

## Revendications

1. Procédé pour exploiter un dispositif de filage (2) d'une machine de filature à rotor (1), dans lequel un rotor de filage (5) avec une coupelle rotorique (6) et une tige (7) de rotor est mis en rotation au moyen d'un entraînement (11), en particulier un entraînement individuel, qui est disposé dans un carter d'entraînement (8) et qui est en liaison fonctionnelle avec la tige (7) de rotor, et la tige (7) de rotor est montée dans le carter d'entraînement (8) au moyen d'un palier (10, 18), en particulier un palier magnétique, dans le carter d'entraînement (8) au moyen d'un palier (10, 18), en particulier un palier magnétique, dans lequel la coupelle rotorique (6) est disposée dans un carter de rotor (9) pouvant être soumis à une dépression et la tige (7) de rotor s'étend à travers une ouverture de liaison (12) entre le carter d'entraînement (8) et le carter de rotor (9), de sorte que le carter d'entraînement est également soumis à une dépression pendant le processus de filage, et dans lequel de l'air comprimé est introduit à intervalles dans le carter d'entraînement (8) par une entrée d'air,
**caractérisé en ce que** de l'air comprimé est introduit dans le carter d'entraînement (8) par l'entrée d'air pour le nettoyage du palier (10, 18), dans lequel l'air comprimé est introduit dans le carter d'entraînement (8) à une extrémité de la tige (7) de rotor détournée de la coupelle rotorique (6), en particulier dans la zone d'un palier axial (18) du palier (10, 18), et dans lequel l'air comprimé étant introduit directement dans un entrefer (15) du palier (10, 18).

2. Procédé selon la revendication précédente, **caractérisé en ce que** l'air comprimé est évacué du carter d'entraînement (8) vers le carter de rotor (9) par l'ouverture de liaison (12).

3. Procédé selon l'une quelconque ou plusieurs des revendications précédentes, **caractérisé en ce que** l'air comprimé est introduit dans le carter d'entraînement (8) à des intervalles de temps réglables.

4. Procédé selon l'une quelconque ou plusieurs des revendications précédentes, **caractérisé en ce que** l'air comprimé est introduit dans le carter d'entraînement (8) via une conduite d'air (16).

5. Procédé selon l'une quelconque ou plusieurs des revendications précédentes, **caractérisé en ce que** l'air comprimé est introduit pendant une interruption du processus de filage du dispositif de filage (2), de préférence après une ouverture du dispositif de filage (2), de manière particulièrement préférée pendant un nettoyage du rotor et/ou simultanément à une coupe du fil (4) lors du rattachement.

6. Procédé selon l'une quelconque ou plusieurs des revendications 1 à 4 précédentes, **caractérisé en ce que** l'air comprimé est introduit pendant le processus de filage du dispositif de filage (2).

7. Procédé selon l'une quelconque ou plusieurs des revendications précédentes, **caractérisé en ce que** l'air comprimé est fourni par une unité de maintenance.

8. Procédé selon l'une quelconque ou plusieurs des revendications 1 à 6 précédentes, **caractérisé en ce que** l'air comprimé est fourni par une conduite d'air comprimé (22) s'étendant sur plusieurs dispositifs de filage (2) de la machine de filature à rotor (1).

9. Dispositif de filage (2) d'une machine de filature à rotor (1), en particulier pour l'exécution du procédé selon l'une quelconque des revendications précédentes, comportant un carter de rotor (9) pouvant être soumis à une dépression, dans lequel peut être disposée une coupelle rotorique (6) d'un rotor de filage (5), et un carter d'entraînement (8) relié au carter de rotor (9), dans lequel est disposé un palier (10, 18), en particulier un palier magnétique, pour une tige (7) de rotor du rotor de filage (5), dans lequel le carter de rotor (9) et le carter d'entraînement (8) sont reliés l'un à l'autre par une ouverture de liaison (12) pour la tige (7) de rotor, de sorte que le carter d'entraînement est également soumis à la dépression pendant le processus de filature, avec au moins une entrée d'air par laquelle de l'air comprimé peut être introduit dans le carter d'entraînement (8), et avec une unité de commande pour commander l'alimentation en air comprimé,
dans lequel l'air comprimé peut être introduit au moyen de l'unité de commande de manière intermittente, via de l'entrée d'air, dans le carter d'entraînement (8), **caractérisé en ce que** l'air comprimé peut être introduit de préférence à des intervalles de temps réglables et **en ce que** l'entrée d'air ou une première extrémité d'une conduite d'air (16) reliée à l'entrée d'air débouche directement dans un entrefer (15) du palier (10, 18), dans lequel l'entrée d'air ou la première extrémité de la conduite d'air (16) est disposée dans la zone d'une face arrière (R) du dispositif de filage (2), de sorte que l'air comprimé est introduit dans le carter d'entraînement à une extrémité de la tige (7) de rotor détournée de la coupelle rotorique (6).

10. Dispositif de filage selon la revendication précédente, **caractérisé en ce que** l'entrée d'air ou la première extrémité de la conduite d'air (16) est disposée dans la zone d'un palier axial (18) du palier (10, 18).

11. Dispositif de filage selon l'une quelconque ou plusieurs des revendications de dispositif précédentes, **caractérisé en ce que** la conduite d'air (16) débouche avec sa deuxième extrémité éloignée de l'entrée d'air sur un côté avant (V) du dispositif de filage (2).

12. Dispositif de filage selon l'une quelconque ou plusieurs des revendications de dispositif précédentes, **caractérisé en ce que** la conduite d'air (16) présente un ensemble de couplage (19) au niveau duquel une unité de maintenance peut appliquer de l'air comprimé à la conduite d'air (16).

13. Dispositif de filage selon l'une quelconque ou plusieurs des revendications de dispositif précédentes, **caractérisé en ce que** la conduite d'air (16) présente à sa deuxième extrémité éloignée de l'entrée d'air une soupape (23).

14. Dispositif de filage selon l'une quelconque ou plusieurs des revendications de dispositif 9 à 11 ou 13 précédentes, dans la mesure où elles ne dépendent pas de la revendication 12, **caractérisé en ce que** la conduite d'air (16) est reliée par sa deuxième extrémité éloignée de l'entrée d'air à une conduite d'air comprimé (22) s'étendant sur plusieurs dispositifs de filage (2) de la machine de filature à rotor (1).

15. Dispositif de filage selon la revendication de dispositif 13, de préférence en liaison avec la revendication de dispositif 14, **caractérisé en ce que** le dispositif de filage (2) comporte un dispositif de coupe (24) pneumatique pour un fil (4) produit dans le dispositif de filage (2) et **en ce que** le dispositif de coupe (24) est également relié à la soupape (23).
